# EUROPEAN PATENT SPECIFICATION

(11) **EP 2 253 776 B1**
(45) Date of publication and mention of the grant of the patent: **26.02.2014**
(21) Application number: 10163684.3
(22) Date of filing: 24.05.2010
(51) Int. Cl.: E04F 15/02, E04B 5/48, E04C 2/34, E04C 2/52

(54) **Structural flooring panel and floor structure incorporating the same**
Struktur-Bodenverlegungstafel und Bodenstruktur damit
Panneau de plancher structurel et structure de plancher l'incorporant

(30) Priority: 22.05.2009 US 180713 P
(43) Date of publication of application: 24.11.2010
(73) Proprietor: Thermapan Industries Inc., Fort Erie ON L2A 5N2 (CA)
(72) Inventor: Taraba, Jeffrey M., Fort Erie Ontario L2A 5M4 (CA); Taraba, Emil M., Fort Erie Ontario L2A 5M4 (CA)
(74) Representative: Smee, Anthony James Michael

(56) References cited:
- WO-A1-02/22975
- DE-A1- 2 835 849
- DE-U1- 20 315 506
- FR-A1- 2 488 306
- US-A1- 2006 260 267

## Description

### Field of the Invention

The present invention relates generally to building structures and in particular, to a structural flooring panel and to a floor structure incorporating the same.

### Background of the Invention

In residential homes and other building structures, floors are typically constructed by fastening one or more sheets of a wood-based material, such as plywood or oriented strand board ("OSB"), to laterally spaced, longitudinally extending lumber joists. The joists are oriented to provide increased strength and resist bending, as is known in the art.

Ducting for heating, ventilation, and air-conditioning is typically incorporated into the building structure once the floors have been constructed. This involves affixing one or more primary ventilation ducts to the underside of the joists, and running secondary ducts stemming from the primary ducts between joists.

Recently, structural building panels have become an increasingly common material for use in the construction of residential homes and other building structures due to their low cost, high strength, high energy efficiency, and ease of installation. Structural insulated panels ("SIPs") are one form of structural building panel, and have a sandwich-type structure comprising two sheets typically of a wood-based material, such as plywood or OSB, adhesively bonded to opposite sides of an inner slab of foam insulation. Expanded polystyrene ("EPS") is typically used for the foam insulation, with extruded polystyrene and polyurethane foam sometimes being used. When used during the construction of walls, the bonded sandwich structure of SIPs has been demonstrated to provide comparable strength to conventional walls comprising a lumber stud frame filled with fiberglass insulation. SIPs are typically fabricated as sheets of a standard size (e.g. 4 feet × 8 feet), which can then be cut to size on-site as needed prior to installation.

Structural building panels for use as flooring panels have also been considered. For example, U.S. Patent No. 6,279,287 to Meadows discloses a prefabricated building panel including first and second side panel members. A thermally insulating core is disposed between the side panel members. A first panel end surface includes a pair of spaced projections defining a channel-way. A second panel end surface includes a pair of spaced channels and a thermal barrier plug. Two adjacent building panels may be interconnected by engaging the pair of spaced projections at the first end of the first panel with the pair of spaced channels in the second end of the second panel while simultaneously engaging the thermally insulating plug at the second end of the second panel in the channel-way at the first end of the first panel.

U.S. Patent No. 6,564,521 to Brown et al. discloses a structural sandwich panel wherein during fabrication, facing sheets are placed in position in a containment form assembly and a foam resin core material is injected between the facing sheets and allowed to cure. The resultant structural sandwich panel includes elongated recesses which form a joint for joining abutting structural sandwich panels together and cam-locks to secure adjoining structural sandwich panels together.

U.S. Patent No. 6,599,621 to Porter discloses a generally flat structural panel for building construction including an inner insulating core such as plastic foam and a pair of opposed outer facings, or sheets, bonded to the insulating core. One of the outer facings is of gypsum composite, or gypsum fiberboard, while the other outer facing is of oriented strand board (OSB) impregnated with plastic, such as a polyisocyanurate or urethane resin. The gypsum fiberboard forms the panel's inner surface, while the plastic impregnated OSB forms the panel's outer surface. The panel's outer facings provide high tensile strength, with the gypsum fiberboard facing also affording high load bearing capacity as well as resistant to fire, the environment, and insects. The plastic impregnated OSB does not expand or contract with changes in humidity to maintain a planar configuration for the structural panel with a smooth, uniform surface for exterior finishing.

U.S. Patent Application Publication No. 2007/0125042 to Hughes et al. discloses a structural insulated laminated construction panel for building structures comprising a rigid core material layer, preferably an expanded polystyrene material, having opposed flat parallel surfaces.

As will be appreciated, the structural building panels described in the above references have a closed structure. As a result when a floor structure is constructed using these structural building panels, ducting for heating, ventilation, and air conditioning cannot be readily integrated into the floor structure. Consequently, all ducting must be affixed to the external surfaces of the flooring structure. This adds to the total quantity of material used in the construction of the building structure, and increases its overall cost. Additionally, ducts that are affixed to the external surfaces of the flooring structure can be bulky, and can reduce the overhead clearance in rooms. As will be appreciated, improvements in structural flooring panels are desired.

DE 2 835 849 A1 discloses a structural flooring panel comprising an upper and a lower horizontal rectangular sheet, spaced from each other by a plurality of longitudinally extending ribs between the sheets. The ribs being laterally spaced to define internal channels. Opposite longitudinal ends of the panel are open.

It is therefore an object of the present invention to provide a novel structural flooring panel and a novel floor structure incorporating the same.

### Summary of the Invention

Accordingly, in one aspect there is provided a structural flooring panel according to claim 1.

In one embodiment, the ribs define a plurality of longitudinally extending, internal channels within the flooring panel, with the internal channels being preferably, generally parallel. The internal channels also extend generally the length of the panel.

In one embodiment, at least one passage is provided through at least one of the ribs to bring adjacent internal channels into fluid communication. In another embodiment, at least one passage is provided through at least one of the upper and lower sheets, with the at least one passage being in fluid communication with an internal channel.

In one form, each of the ribs comprises a pair of rib sheets and insulation between the rib sheets. Each of the rib sheets is bonded to an opposite side of the insulation. The rib sheets of each rib are oriented so that the planes of their major surfaces are generally perpendicular to the planes of the major surfaces of the upper and lower sheets. According to the invention each rib comprises a slab of insulation and a rib sheet bonded to one side of the slab of insulation.

According to another aspect, a floor structure is provided that comprises a plurality of abutting structural flooring panels as described above. The abutting structural flooring panels are arranged side-by-side and end-to-end. In one arrangement, the internal channels of the end-to-end structural flooring panels are axially aligned and in an alternative arrangement the internal channels of the end-to-end structural flooring panels are axially offset. The abutting structural flooring panels may also carry mating formations.

### Brief Description of the Drawings

Embodiments will now be described more fully with reference to the accompanying drawings in which:
Figure 1a is a cross-sectional side view of a building structure incorporating structural flooring panels;
Figure 1b is an enlarged portion of Figure 1a.
Figures 2a and 2b are side elevational and top plan views of a floor structure formed of a plurality of abutting structural flooring panels;
Figures 3a, 3b, and 3c are front elevational, top plan and side elevational views, respectively, of one of the structural flooring panels forming the floor structure of Figures 2a and 2b;
Figure 4 is a cross-sectional perspective view of a portion of the structural flooring panel of Figures 3a to 3c;
Figure 5 is a front elevational view of the structural flooring panel of Figures 3 a to 3 c;
Figures 6a and 6b are front elevational views of a joint between two adjacent structural flooring panels forming part of the floor structure of Figures 2a and 2b;
Figures 7a and 7b are front elevational views of site-crafted joints between two adjacent structural flooring panels forming part of a floor structure;
Figure 8 is a front elevational view of a portion of another embodiment of a structural flooring panel;
Figures 9a, 9b, and 9c are front elevational, top plan and side elevational views, respectively, of yet another embodiment of a structural flooring panel;
Figures 10a, 10b, and 10c are front elevational, top plan and side elevational views, respectively, of yet another embodiment of a structural flooring panel;
Figures 11a, 11b, and 11c are front elevational, top plan and side elevational views, respectively, of yet another embodiment of a structural flooring panel; and
Figures 12a, 12b, and 12c are front elevational, top plan and side elevational views, respectively, of still yet another embodiment of a structural flooring panel.

### Detailed Description of the Embodiments

The following discussion relates a structural flooring panel for use in a building structure comprising two sheets separated by a plurality of laterally spaced, generally parallel ribs. The ribs are spaced so as to provide structural support for the structural flooring panel and to define longitudinally extending, internal channels within the structural flooring panel. A floor structure can be easily and quickly assembled using the structural flooring panels. Heated or cooled air can be forced through the internal channels within the structural flooring panels to provide a heated or cooled floor structure.

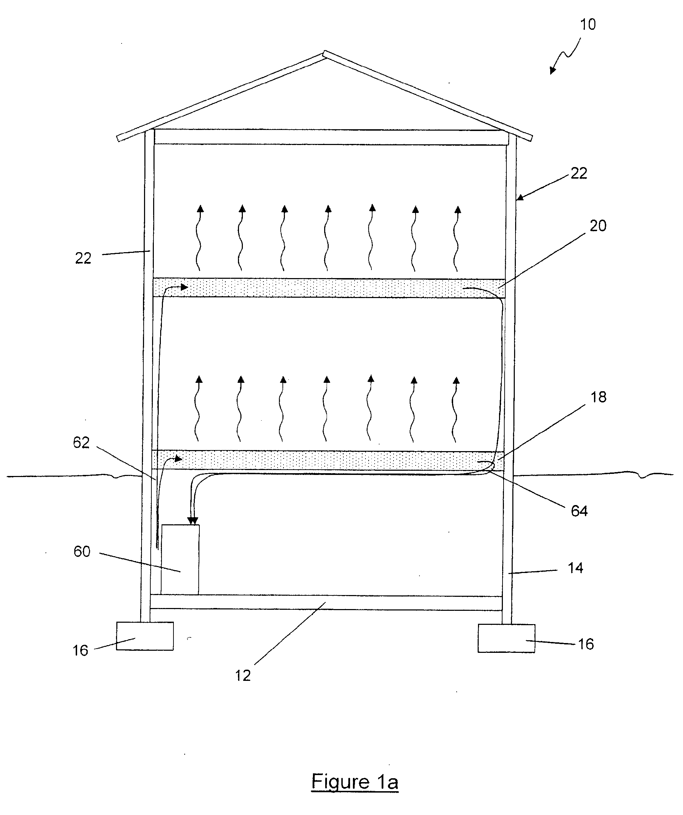

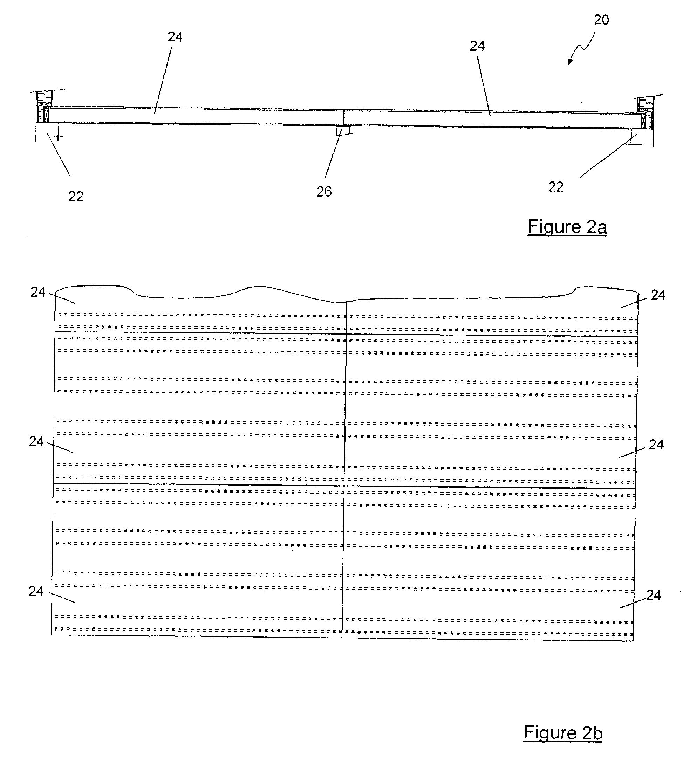

Turning now to Figures 1a to 2b, a building structure is shown and is generally identified by reference numeral 10. In this embodiment, the building structure 10 is a house and comprises a foundation slab 12 surrounded by foundation walls 14 that are supported on footings 16 below the foundation slab 12. First and second floor structures 18 and 20 are provided within the building structure 10 at different elevations and are surrounded by external walls 22. Structural flooring panels 24 are used to construct the floor structures 18 and 20. In particular, each floor structure comprises an array of structural flooring panels 24 arranged side-to-side and end-to end as best seen in Figure 2a. The length of each structural flooring panel 24 is selected so that the ends of the structural flooring panel are either supported by the exterior walls 22 or by support beams 26 as shown in Figure 2b.

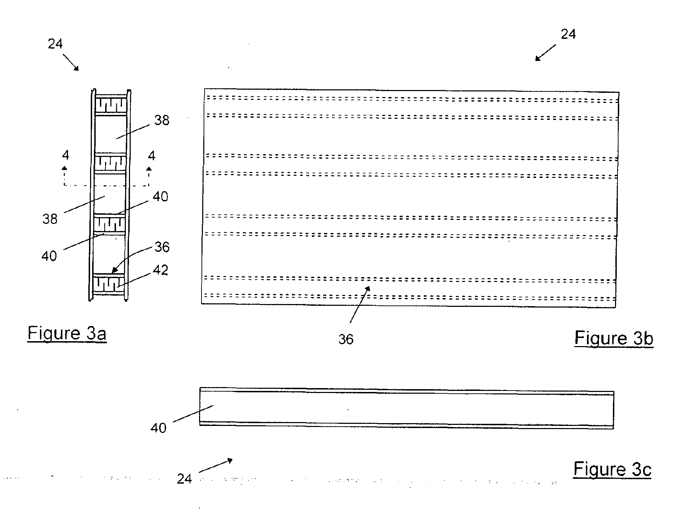

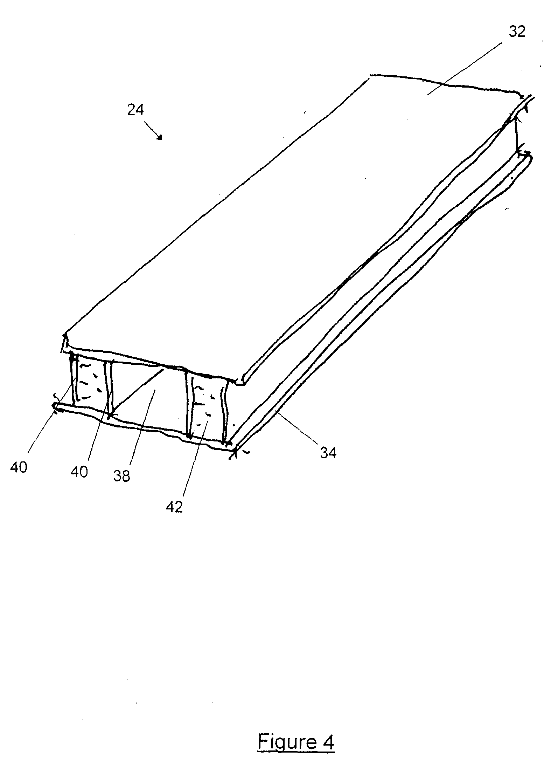

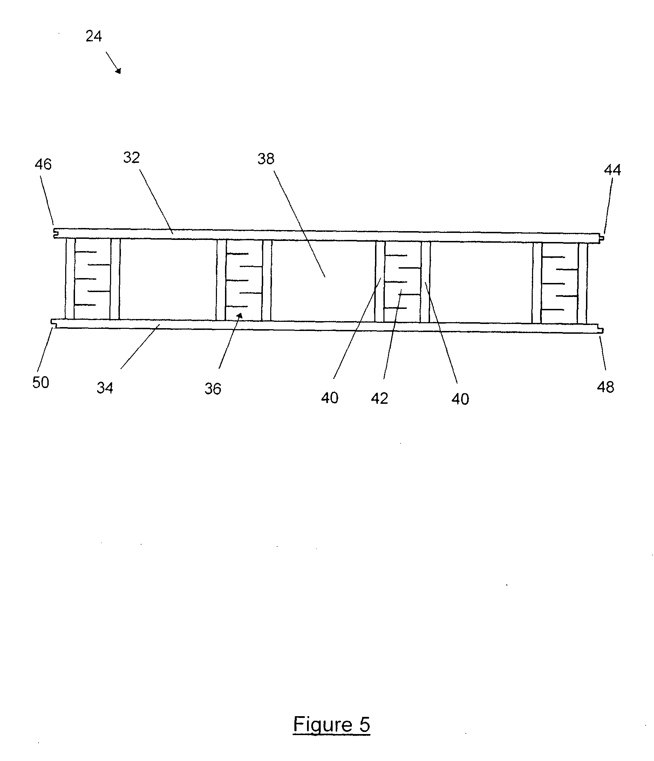

Turning now to Figures 3a to 5 one of the structural flooring panels 24 is better illustrated. As can be seen, structural flooring panel 24 comprises an upper sheet 32 and a lower sheet 34 separated by a plurality of laterally and generally equally spaced, longitudinally extending, generally parallel ribs 36 adhesively bonded to the sheets. In the embodiment shown, sheets 32 and 34 are formed of oriented strand board ("OSB") or other suitable material such as for example plywood, medium density fiberboard, particle-board, concrete sheet, magnesium-based sheet etc. The spacing of the ribs 36 is selected so as to provide the structural flooring panel 24 with sufficient structural support and resist bending against vertically-imposed loads to comply with the strength requirements of local building codes while at the same time to define a plurality of longitudinally extending, internal channels 38 within the structural flooring panel 24.

Each rib 36 has a "sandwich" structure comprising two rib sheets 40, each of which is adhesively bonded to an opposite side of a slab of insulation 42. In this embodiment, the rib sheets 40 are formed of a wood-based material, such as OSB, plywood, fiberboard, particle-board etc. The insulation slab 42 is formed of suitable material, such as expanded polystyrene, honeycomb cardboard, extruded polystyrene, polyurethane foam, and the like. The planes of the major surfaces of the rib sheets 40 are perpendicular to the planes of the major surfaces of the upper and lower sheets 32, 34. This orientation of each rib 36 relative to the sheets 32 and 34 takes advantage of the high in-plane strength of the rib sheets 40, which stiffens the structural flooring panel 24 and contributes to its high bending strength.

Opposite sides of the upper and lower sheets 32 and 34 carry formations so that when the structural flooring panel 24 is brought side-to-side with another similar structural flooring panel, the formations on the upper and lower sheets of the abutting structural flooring panels mate. In particular, a longitudinally extending tongue 44 is provided on one side of the upper sheet 32 and a longitudinally extending groove 46 is provided in the opposite side of the upper sheet 32. The side of the lower sheet 34 beneath the tongue 44 is notched to define a lower lap member 48 while the side of the lower sheet 34 beneath the groove 46 is notched to define an upper lap member 50.

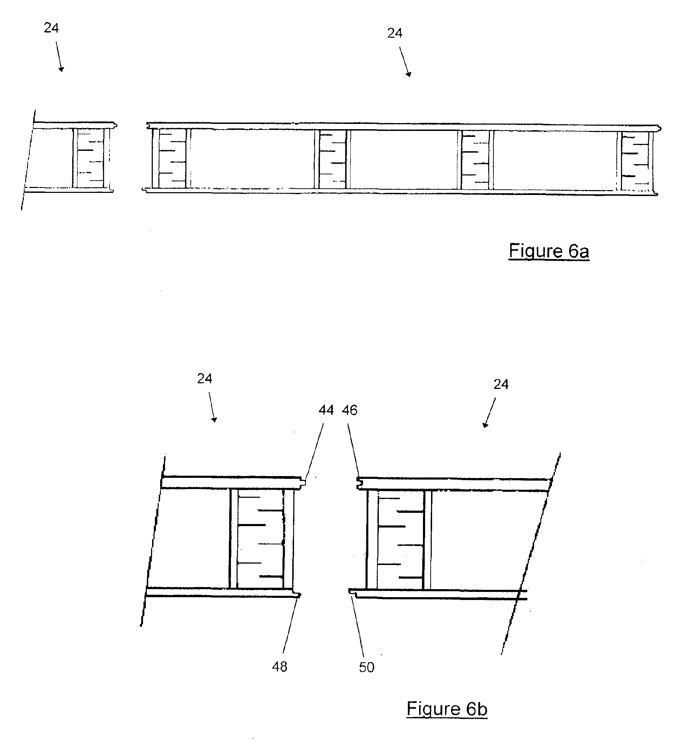

Figures 6a and 6b show the joint between two adjacent structural flooring panels 24 when arranged in a side-by-side manner. As can be seen, when the two structural flooring panels 24 are positioned with their longitudinal sides in an abutting relationship, the abutting sides of the upper sheets 32 form a tongue-and-groove joint and the abutting sides of the lower sheets 34 form a ship lap joint.

The end-to-end arrangement of the structural flooring panels 24 is typically chosen so that corresponding longitudinally extending, internal channels 38 of the structural flooring panels are axially aligned thereby to provide continuous internal channels 38 across the floor structure. However, it will be appreciated that the structural flooring panels 24 may be alternatively arranged in a non-aligned, axially offset or "staggered" pattern, provided internal channels 38 of the abutting structural flooring panels 24 are in fluid communication.

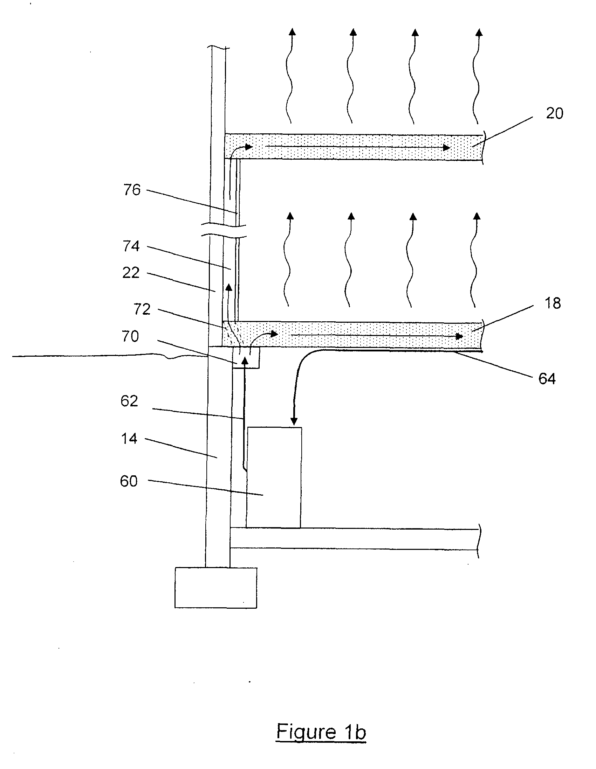

The longitudinally extending, internal channels 38 within the structural flooring panels 24 provide passageways for services. In the building structure 10 shown in Figures 1a and 1b, the longitudinally extending, internal channels 38 are used as ventilation ducts. To that end, turning back to Figure 1a, it can be seen that a heated forced air source 60, such as a furnace, rests on the foundation slab 12. A feed conduit 62 extends from the heated forced air source 60 and delivers heated forced air to the longitudinally extending, internal channels 38 of the structural flooring panels 24. A cold air return conduit 64 returns forced air exiting the opposite ends of the longitudinally extending, internal channels 38 back to the heated forced air source 60. The flow of heated air through the internal channels 38 results in heated floor structures. Once heated, the structural flooring panels 24 also radiate heat into the interior of the building structure 10.

Figure 1b better illustrates the fluid connections between the floor structures 18 and 20 and heated forced air source 60. Heated air generated by the heated forced air source 60 is transported through the feed conduit 62 into a manifold duct 70, which runs the length of the foundation wall 14 and along the underside of the floor structure 18. Manifold duct 70 is in fluid communication with a plurality of holes (not shown) formed in the lower sheets 34 of the structural flooring panels 24 that are aligned with the internal channels 38. Manifold duct 70 is also in fluid communication with one or more minor ducts 72. Each minor duct 72 passes through the floor structure 18 and into a respective wall duct 74. The wall ducts 74 are formed between an external wall 22 of the building structure 10 and an interior skin 76, which in the embodiment shown is drywall. The width of each wall duct 74 is defined by a pair of studs mounted vertically against the external wall 22, and to which interior skin 76 is fastened. Each wall duct 74 is in fluid communication with structural flooring panels 24 forming the upper floor structure 20 of the building structure 10, through holes formed in the underside of each lower sheet that are aligned with the internal channels 38. Reciprocal arrangements (not shown) exist for returning cold air flow, which is directed back to the heated forced air source 60 through the cold air return conduit 64.

Structural flooring panels 24 may be fabricated in standard sizes. For example, in the embodiment shown, each structural flooring panel 24 has dimensions 4' × 8' × 10" (width by length by thickness), however, structural flooring panels 24 may also be fabricated in other sizes such as 4' × 16', or 4' × 20', for example. It will be appreciated that as the fabricated length of a structural flooring panel 24 is increased, its strength can also be increased as desired by increasing the height of the ribs 36, by reducing the spacing of the ribs 36, and/or by increasing the width of each rib 36, and more specifically by increasing the thicknesses of the insulation slab 42 and/or the rib sheets 40. Additionally, the strength of the structural flooring panel 24 can be increased by strengthening either sheet 32 or 34, such as by increasing the thickness of the sheet 32 and/or sheet 34 or by using sheets 32, 34 formed of a stronger material.

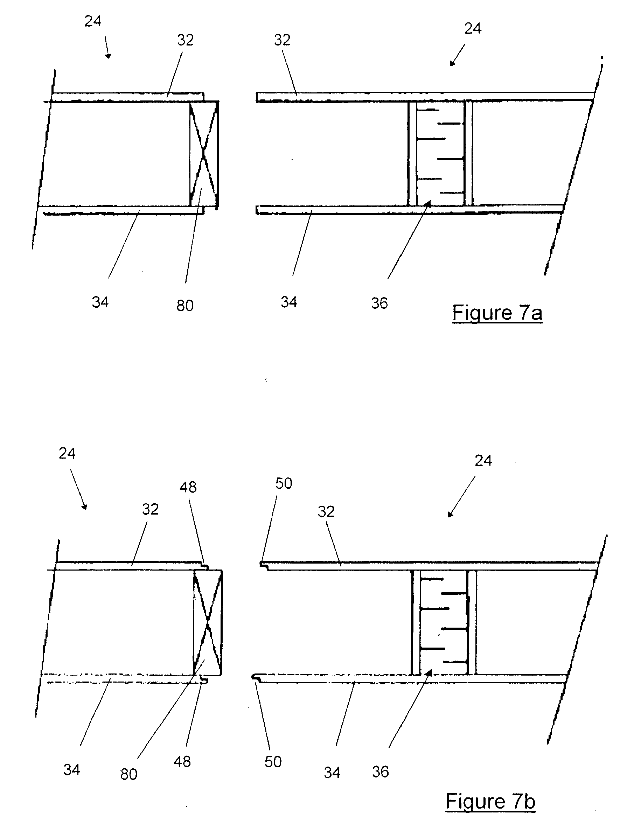

As floor areas can be of any size and shape, structural flooring panels 24 can be readily cut to size on-site as needed to construct the floor structure. A structural flooring panel 24 may be cut vertically through its thickness without significant loss of structural integrity. Such cutting may however result in loss of the joining formations provided on the upper and lower sheets 32 and 34. In this event, further modifications can be made to a cut structural flooring panel 24 to enable joining with other structural flooring panels. Figure 7a shows a "site-crafted" joint between two adjacent side-by-side structural flooring panels 24, in which a lumber spline 80 is inserted into one of the structural flooring panels 24 and generally parallel to the ribs 36. In this example, the tongue 44 and groove 46 of the upper sheets 32 of the structural flooring panels 24, and the lower and upper lap members 48 and 50 of the lower sheets 34 of the structural flooring panels 24, have been removed as a result of cutting, leaving flat surfaces at the sides of the sheets 32 and 34. The lumber spline 80 is positioned midway between the abutting sides of the sheets 32 and 34 so as to form a butt joint between the structural flooring panels 24. In the embodiment shown, lumber spline 80 is oriented generally parallel to the ribs 36 but non-parallel orientations may be used. The sheets 32 and 34 are fastened to the lumber spline 80 using screws, nails, adhesive or other suitable fasteners.

Figure 7b shows an alternative site-crafted joint between two side-by-side cut structural flooring panels 24, in which a lumber spline 80 is similarly inserted into one of the structural flooring panels parallel to the ribs 36. In this embodiment, rather than leaving the abutting sides of the structural flooring panel sheets flat, the abutting sides of the upper and lower sheets are appropriately notched to form lower and upper lap members 48 and 50. The lumber spline 80 is positioned midway between the abutting sides of the sheets and the sheets are suitably fastened to the lumber spline as described above.

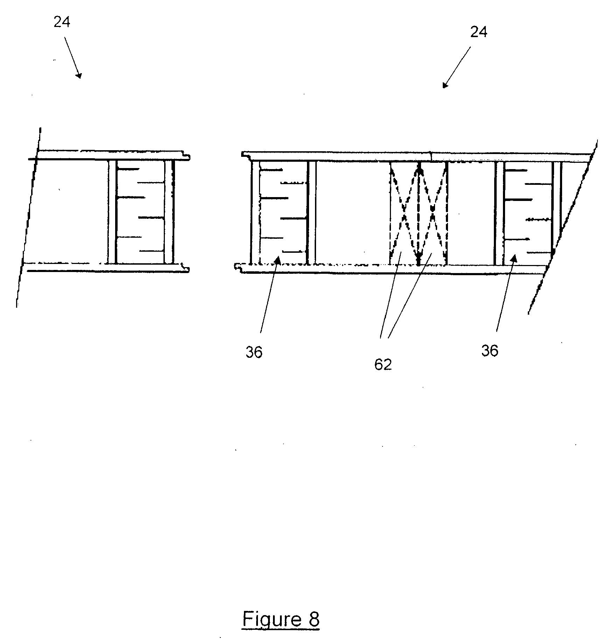

Structural flooring panel 24 can also be modified on-site to provide additional support for point or local loads imposed upon the structural flooring panel 24, as needed. Figure 8 shows a structural flooring panel 24 in which two lumber sections 90 are inserted into an internal channel 38 to provide local reinforcement between a pair of the ribs 36. In the embodiment shown, each lumber section 62 is a section of a lumber board, and has a length selected to provide an adequately-sized area of reinforcement within the structural flooring panel 24, as desired.

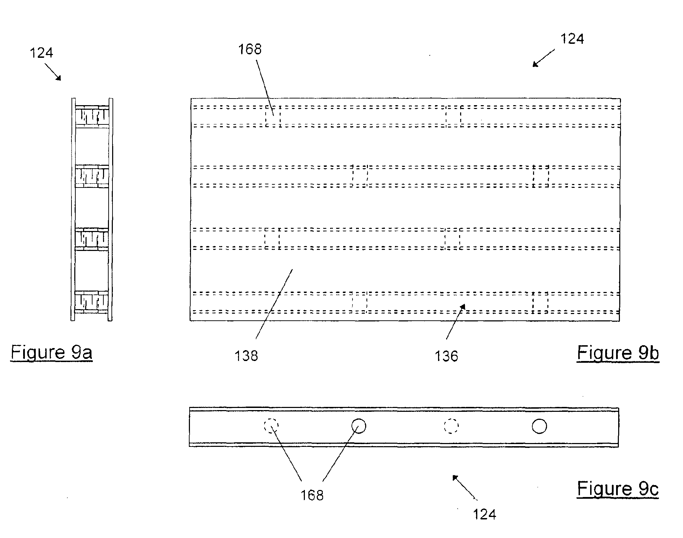

Figures 9a to 9c show another embodiment of a structural flooring panel, generally indicated by reference numeral 124. Structural flooring panel 124 in this embodiment similarly comprises an upper sheet 132, a lower sheet 134 and a plurality of laterally spaced, generally parallel ribs 136 bonded to the sheets. Each rib 136 comprises a pair of rib sheets 140, each of which is adhesively bonded to an opposite side of a foam insulation slab 142. Cross-ducts 168 are formed in the ribs 136 to enable fluid communication between adjacent internal channels 138 within the structural flooring panel 124. In the embodiment shown, the cross-ducts 168 are circular bores provided through each rib 136 at spaced locations. The bores are arranged within structural flooring panel 124 in a staggered pattern. As will be appreciated, the cross-ducts 168 can improve the temperature uniformity within the structural flooring panel 124 when non-room temperature air is forced through the internal channels 138.

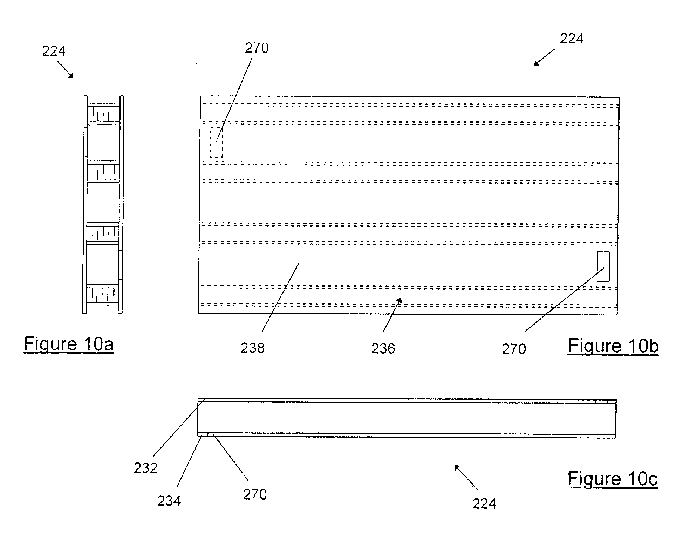

Figures 10a to 10b show yet another embodiment of a structural flooring panel, generally indicated by reference numeral 224. Structural flooring panel 224 in this embodiment similarly comprises an upper sheet 232, a lower sheet 234 and a plurality of laterally spaced, generally parallel ribs 236 bonded to the sheets. Each rib 236 comprises a pair of rib sheets 240, each of which is adhesively bonded to an opposite side of a foam insulation slab 242. Vents 270 for allowing forced air provided to the internal channels of the structural flooring panel to escape into the interior of the building structure are formed in the structural flooring panel 224. In the embodiment shown, one vent 270 is formed in the upper sheet 232 in line with one of the internal channels 238 and one vent is formed in the lower sheet 234 in line with another of the internal channels 238.

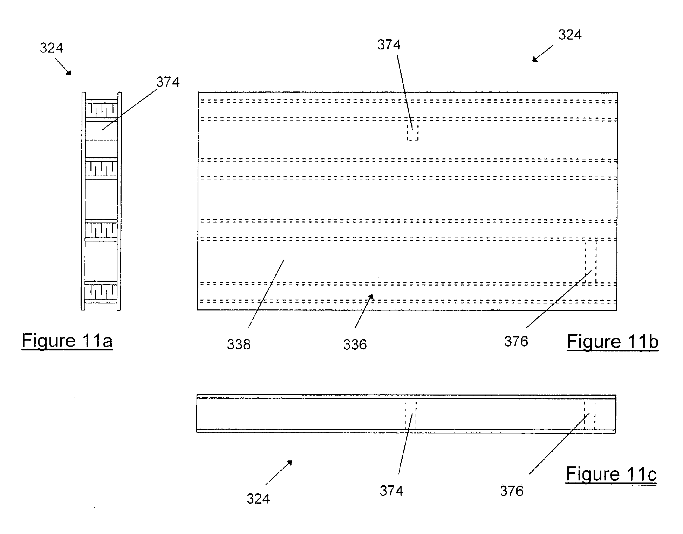

Figures 11a to 11c show yet another embodiment of a structural flooring panel, generally indicated by reference numeral 324. Structural flooring panel 324 in this embodiment similarly comprises an upper sheet 332, a lower sheet 334 and a plurality of laterally spaced, generally parallel ribs 336 bonded to the sheets. Each rib 236 comprises a pair of rib sheets 340, each of which is adhesively bonded to an opposite side of a foam insulation slab 340. A baffle 374 is positioned within one internal channel 338, which partially obstructs that internal channel and thereby reduces the quantity of air flow along that internal channel. A plug 376 is positioned within another internal channel 338 to completely obstruct that channel and thereby block all air flow along that internal channel. In the embodiment shown, baffle 374 and plug 376 are pieces of lumber boards.

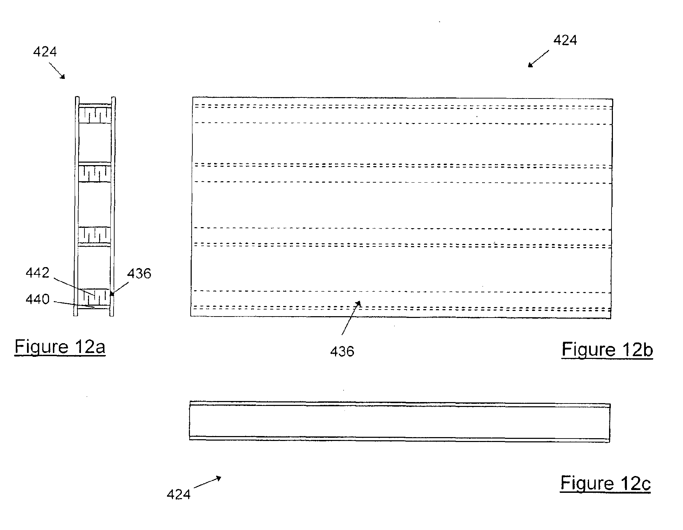

Figures 12a to 12c show still yet another embodiment of a structural flooring panel, generally indicated by reference numeral 424. Structural flooring panel 424 in this embodiment similarly comprises an upper sheet 432, a lower sheet 434 and a plurality of laterally spaced, generally parallel ribs 436 bonded to the sheets. Each rib 436 comprises a single rib sheet 440 adhesively bonded to one side of a foam insulation slab 442. The use of only a single rib sheet, instead of two rib sheets, allows structural flooring panel 424 to be fabricated using a smaller quantity of material, resulting in a lower cost of fabrication.

Although the internal channels of the structural flooring panels described above are used to channel heated forced air through the structural flooring panels, the internal channels of the structural flooring panels may be used to channel cooled air or ambient air through the structural flooring panels. In this case, a cooled forced air unit such as an air conditioner or an ambient forced air unit such as a blower may be used to provide the forced cooled air or forced ambient air to the structural flooring panels. Of course, one flooring structure may be provided with one type of forced air while another flooring structure may be provided with another type of forced air. Alternatively, some of the internal channels of a structural flooring panel may be provided with one type of forced air while other internal channels of the structural flooring panel may be provided with another type of forced air.

Rather than acting as ventilation ducts or in addition to acting as ventilation ducts, the internal channels of the structural flooring panels may also be used to accommodate conduits through which utilities such as plumbing and/or electrical wiring may be run. For example, the internal channels may accommodate plumbing for a sprinkler system and/or conduit for electric wiring. Alternatively or in conjunction with the sprinkler system piping and/or conduit, the internal channels may accommodate piping for a radiant hot water system and/or other desired services.

If desired, the upper sheet, lower sheet, and/or rib sheets may be made from a fire-proof material (e.g. "Blaze Guard") or treated with a fire proof material so as to increase the resistance of the structural flooring panel to fire.

In the embodiments described above, the structural flooring panels are shown as comprising either cross-ducts, vents, or baffles and plugs, or none of these features. Those of skill in the art will appreciate that the structural flooring panels may comprise a combination of these features.

Although the structural flooring panels are described as comprising ribs having a "sandwich" structure, those of skill in the art will appreciate that the ribs may take other forms. For example, the ribs may comprise boards or joists formed of suitable material. If desired, the spacing between the ribs and/or the longitudinal orientations of the ribs may vary resulting in internal channels with different dimensions.

In the embodiments described above, the structural flooring panels comprise first and second sheets formed of the same material. Those of skill in the art however will appreciate that the first and second sheets may be formed of different materials.

Although specific joints between adjacent structural flooring panels are shown and described, those of skill in the art will appreciate that alternative joints between adjacent structural flooring panels may be employed.

While the structural flooring panels are described as being fabricated in sizes of 4' × 8' × 10", 4' × 16' (× 10"), or 4' × 20' (× 10"), those of skill in the art will appreciate that the structural flooring panels may fabricated in virtually any shape or size.

## Claims

1. A structural flooring panel (24) comprising:
an upper, generally horizontal rectangular sheet (32);
a lower, generally horizontal rectangular sheet (34) spaced from said upper sheet (32); and
a plurality of longitudinally extending ribs (36) between the sheets, the ribs being laterally spaced to define at least one longitudinally extending, internal channel (38) defining a passageway for services within the flooring panel (24), wherein opposite longitudinal ends of said flooring panel are open, and wherein each of said ribs (36) comprises a slab of insulation (42) and at least one high in-plane strength rib sheet bonded to a respective side of the slab of insulation (42), the major surfaces of said at least one rib sheet being generally perpendicular to the major surfaces of said upper (32) and lower sheets (34).

2. A structural flooring panel (24) according to claim 1, wherein said ribs (36) define a plurality of longitudinally extending, internal channels (38) within the flooring panel.

3. A structural flooring panel (24) according to claim 2, wherein said internal channels (38) are generally parallel and extend generally the length of said flooring panel (24).

4. A structural flooring panel (24) according to any one of claims 1 to 3, further comprising at least one passage through at least one of said ribs (36) to bring adjacent internal channels into fluid communication.

5. A structural flooring panel (24) according to claim 4, comprising at least one passage through a plurality of ribs (36).

6. A structural flooring panel (24) according to claim 5, wherein the passages provided through the ribs (36) are staggered in such a way that the passages in a rib are shifted with respect to the passages in the adjacent rib.

7. A structural flooring panel (24) according to any one of claims 2 to 6, further comprising at least one passage through at least one of said upper (32) and lower sheets (34), said at least one passage being in fluid communication with an internal channel (38).

8. A structural flooring panel (24) according to claim 7, comprising passages through at least one of said upper (32) and lower sheets (34), each passage being in fluid communication with a respective one of said internal channels (38).

9. A structural flooring panel (24) according to any one of claims 1 to 8, wherein each of said upper (32) and lower sheets (34) is formed of one of oriented strand board, plywood, fiberboard, particle-board, concrete sheet and magnesium-based sheet.

10. A structural flooring panel (24) according to any one of claims 1 to 9, wherein each of said ribs (36) comprises:
a pair of rib sheets, each of the rib sheets being bonded to an opposite side of the slab of insulation.

11. A structural flooring panel (24) according to claim 10, wherein each rib sheet is formed of one of oriented strand board, particle-board, plywood and fiberboard and wherein said slab of insulation is formed of one of expanded polystyrene, honeycomb cardboard, extruded polystyrene and polyurethane.

12. A floor structure comprising a plurality of abutting structural flooring panels (24) according to any one of claims 1 to 11.

13. A floor structure according to claim 12, wherein said abutting structural flooring panels are arranged side-by-side and end-to-end, wherein the internal channels of end-to-end structural flooring panels are axially aligned or axially offset.

14. A floor structure according to claim 13, wherein abutting structural flooring panels (24) carry mating formations.

15. A floor structure according to claim 14, wherein said mating formations are tongues (44) and grooves (46).

## Patentansprüche

1. Struktur-Bodenverlegungstafel (24), umfassend:
eine obere, generell horizontal rechteckige Platte (32);
eine untere, generell horizontal rechteckige Platte (34), die von der oberen Platte (32) beabstandet ist; und
eine Vielzahl sich zwischen den Platten longitudinal erstreckender Rippen (36), wobei die Rippen lateral beabstandet sind, um zumindest einen sich longitudinal erstreckenden, internen Kanal (38) zu definieren, der einen Durchgang für technische Gebäudeausrüstung innerhalb der Bodenverlegungstafel (24) definiert, wobei ein entgegengesetzte longitudinale Enden der Bodenverlegungstafel offen sind und, wobei jede der Rippen (36) eine Dämmplatte (42) und zumindest eine hochfeste Rippenplatte auf gleicher Ebene umfasst, die an eine jeweilige Seite der Dämmplatte (42) geklebt ist, wobei die Hauptoberflächen der zumindest einen Rippenplatte generell senkrecht zu den Hauptoberflächen der oberen (32) und unteren Platten (34) sind.

2. Struktur-Bodenverlegungstafel (24) nach Anspruch 1, wobei die Rippen (36) eine Vielzahl sich longitudinal erstreckender interner Kanäle (38) innerhalb der Bodenverlegungstafel definieren.

3. Struktur-Bodenverlegungstafel (24) nach Anspruch 2, wobei die internen Kanäle (38) generell parallel sind und sich generell die Länge der Bodenverlegungstafel (24) erstrecken.

4. Struktur-Bodenverlegungstafel (24) nach einem der Ansprüche 1 bis 3, die ferner zumindest einen Durchgang durch zumindest eine der Rippen (36) umfasst, um angrenzende interne Kanäle in Flüssigkeitsanschluss zu bringen.

5. Struktur-Bodenverlegungstafel (24) nach Anspruch 4, die zumindest einen Durchgang durch eine Vielzahl von Rippen (36) umfasst.

6. Struktur-Bodenverlegungstafel (24) nach Anspruch 5, wobei die durch die Rippen (36) bereitgestellten Durchgänge so versetzt sind, dass die Durchgänge in einer Rippe in Bezug auf die Durchgänge in der angrenzenden Rippe verschoben sind.

7. Struktur-Bodenverlegungstafel (24) nach einem der Ansprüche 2 bis 6, die ferner zumindest einen Durchgang durch zumindest eine der oberen (32) und unteren Platten (34) umfasst, wobei der zumindest eine Durchgang in Flüssigkeitsanschluss mit einem internen Kanal (38) ist.

8. Struktur-Bodenverlegungstafel (24) nach Anspruch 7, die Durchgänge durch zumindest eines der oberen (32) und unteren Platten (34) umfasst, wobei jeder Durchgang in Flüssigkeitsanschluss mit einem jeweiligen der internen Kanäle (38) ist.

9. Struktur-Bodenverlegungstafel (24) nach einem der Ansprüche 1 bis 8, wobei jede der oberen (32) und unteren Platten (34) aus jeweils Oriented Strand Board (OSB), Sperrholz, Faserplatte, Spanplatte, Betonplatte und Platte auf Magnesiumbasis gebildet ist.

10. Struktur-Bodenverlegungstafel (24) nach einem der Ansprüche 1 bis 9, wobei jede der Rippen (36) umfasst:
ein Rippenplattenpaar, wobei jede der Rippenplatten an eine entgegengesetzte Seite der Dämmplatte geklebt ist.

11. Struktur-Bodenverlegungstafel (24) nach Anspruch 10, wobei jede Rippenplatte jeweils aus Oriented Strand Board (OSB), Spanplatte, Sperrholz und Faserplatte gebildet ist und, wobei die Dämmplatte aus jeweils aufgeschäumtem Polystyrol, Wabenpappe, extrudiertem Polystyrol und Polyurethan gebildet ist.

12. Bodenstruktur, die eine Vielzahl von aufeinanderstoßenden Struktur-Bodenverlegungstafeln (24) nach einem der Ansprüche 1 bis 11 umfasst.

13. Bodenstruktur nach Anspruch 12, wobei die aufeinanderstoßenden Struktur-Bodenverlegungstafeln nebeneinanderliegend und End-zu-End angeordnet sind, wobei die internen Kanäle von End-zu-End angeordneten Struktur-Bodenverlegungstafeln axial ausgerichtet oder axial versetzt sind.

14. Bodenstruktur nach Anspruch 13, wobei aufeinanderstoßende Struktur-Bodenverlegungstafeln (24) passende Formationen tragen.

15. Bodenstruktur nach Anspruch 14, wobei die passenden Formationen Federn (44) und Nuten (46) sind.

## Revendications

1. Panneau de plancher structurel (24) comportant :
une feuille supérieure rectangulaire généralement horizontale (32) ;
une feuille inférieure rectangulaire généralement horizontale (34) espacée par rapport à ladite feuille supérieure (32) ; et
une pluralité de nervures s'étendant dans le sens longitudinal (36) entre les feuilles, les nervures étant espacées dans le sens latéral pour définir au moins un profilé interne s'étendant dans le sens longitudinal (38) définissant une voie de passage pour les équipements techniques à l'intérieur du panneau de plancher (24), dans lequel des extrémités longitudinales opposées dudit panneau de plancher sont ouvertes, et dans lequel chacune desdites nervures (36) comporte une dalle d'isolation (42) et au moins une feuille de nervure à haute résistance dans le plan reliée à un côté respectif de la dalle d'isolation (42), les surfaces principales de ladite au moins une feuille de nervure étant généralement perpendiculaires par rapport aux surfaces principales desdites feuilles supérieure (32) et inférieure (34).

2. Panneau de plancher structurel (24) selon la revendication 1, dans lequel lesdites nervures (36) définissent une pluralité de profilés internes s'étendant dans le sens longitudinal (38) à l'intérieur du panneau de plancher.

3. Panneau de plancher structurel (24) selon la revendication 2, dans lequel lesdits profilés internes (38) sont généralement parallèles et s'étendent généralement sur toute la longueur dudit panneau de plancher (24).

4. Panneau de plancher structurel (24) selon l'une quelconque des revendications 1 à 3, comportant par ailleurs au moins un passage au travers d'au moins l'une desdites nervures (36) pour mettre des profilés internes adjacents en communication fluidique.

5. Panneau de plancher structurel (24) selon la revendication 4, comportant au moins un passage au travers d'une pluralité de nervures (36).

6. Panneau de plancher structurel (24) selon la revendication 5, dans lequel les passages mis en oeuvre au travers des nervures (36) sont mis en quinconce d'une telle manière que les passages dans une nervure sont décalés par rapport aux passages dans la nervure adjacente.

7. Panneau de plancher structurel (24) selon l'une quelconque des revendications 2 à 6, comportant par ailleurs au moins un passage au travers d'au moins l'une desdites feuilles supérieure (32) et inférieure (34), ledit au moins un passage étant en communication fluidique avec un profilé interne (38).

8. Panneau de plancher structurel (24) selon la revendication 7, comportant des passages au travers d'au moins l'une desdites feuilles supérieure (32) et inférieure (34), chaque passage étant en communication fluidique avec un profilé interne respectif desdits profilés internes (38).

9. Panneau de plancher structurel (24) selon l'une quelconque des revendications 1 à 8, dans lequel chacune desdites feuilles supérieure (32) et inférieure (34) est formée à partir de l'un parmi un panneau de lamelles orientées, un contreplaqué, un panneau de fibres, un panneau de particules, une feuille de béton et une feuille à base de magnésium.

10. Panneau de plancher structurel (24) selon l'une quelconque des revendications 1 à 9, dans lequel chacune desdites nervures (36) comporte :
une paire de feuilles de nervure, chacune des feuilles de nervure étant reliée à un côté opposé de la dalle d'isolation.

11. Panneau de plancher structurel (24) selon la revendication 10, dans lequel chaque feuille de nervure est formée à partir de l'un parmi un panneau de lamelles orientées, un panneau de particules, un contreplaqué et un panneau de fibres et dans lequel ladite dalle d'isolation est formée à partir de l'un parmi du polystyrène expansé, du carton en nid d'abeille, du polystyrène extrudé et du polyuréthanne.

12. Structure de plancher comportant une pluralité de panneaux de plancher structurels mis en butée (24) selon l'une quelconque des revendications 1 à 11.

13. Structure de plancher selon la revendication 12, dans laquelle lesdits panneaux de plancher structurels mis en butée sont agencés côte à côte et bout à bout, dans laquelle les profilés internes des panneaux de plancher structurels mis bout à bout sont alignés dans le sens axial ou décalés dans le sens axial.

14. Structure de plancher selon la revendication 13, dans laquelle les panneaux de plancher structurels mis en butée (24) portent des formations d'accouplement.

15. Structure de plancher selon la revendication 14, dans laquelle lesdites formations d'accouplement sont des languettes (44) et des rainures (46).
